# EUROPEAN PATENT SPECIFICATION

(11) **EP 2 530 047 B1**
(45) Date of publication and mention of the grant of the patent: **24.07.2013**
(21) Application number: 12166075.7
(22) Date of filing: 27.04.2012
(51) Int. Cl.: B67B 3/26, G01M 3/40

(54) **A capping device and a method for verifying an airtight seal of a coupling between a container made of a non-conductive material and a closure thereof**
Verschliessvorrichtung und Verfahren zum Prüfen eines luftdichten Verschlusses einer Kopplung zwischen eines Behälters aus einem nichtleitenden Material und Verschluss damit
Dispositif d'encapsulage et procédé permettant de vérifier un joint étanche à l'air d'un couplage entre un récipient constitué d'un matériau non conducteur et sa fermeture

(30) Priority: 31.05.2011 IT PR20110047
(43) Date of publication of application: 05.12.2012
(73) Proprietor: Gea Procomac S.p.A., 43038 Sala Baganza (PR) (IT)
(72) Inventor: Pagliarini, Paolo, 43123 PARMA (IT)
(74) Representative: Monelli, Alberto

(56) References cited:
- EP-A2- 0 821 230
- DE-A1- 4 135 438
- US-B1- 6 240 769
- US-B1- 6 619 016
- US-B2- 7 038 464

## Description

The present invention relates to a capping device and a method for verifying the airtight seal of the coupling between a container made of a non-conductive material and a closure thereof, in accordance with the preamble of claims 8 and 1 respectively, and as known from US 6,240,769.

In particular, the proposed method and the capping device are used in the bottling sector with aseptic technology, in which it is of primary importance to keep the level of contamination under control.

In this particular case, attention is focused on the step of capping a container made of PET containing a beverage. As is known, among the various functions performed by the cap or capsule, there is the function of ensuring an airtight seal of the container. It is therefore essential to check for the presence of micro-holes, cracks or other defects in the internal coupling area between the cap and the neck of the container, which create passages for the entry of any contaminants into the container and compromise the airtight seal. Indirect methods are already known for verifying the integrity of the coupling between a container and the closure (cap or capsule) thereof. These methods are based on the detection of some capping parameters (rotation speed of the screw head, pitch, number of turns, etc.) and use an external unit (inspector) suitable for capturing images of the bottle necks to verify the presence of visible external defects (for example, caps inclined due to being badly screwed or other evident damage).

The main disadvantage of indirect methods is linked to the impossibility of detecting the presence of internal coupling defects to guarantee the air-tightness of the container. To this end, suitable destructive tests must also be carried out on a sample of some bottles, since in-line direct methods (so-called "squeezer" or vacuum systems) are not able to detect defects of the order of microns which expose the container to risks of recontamination following the analysis itself. In fact, in the presence of micro-defects, the air of the external environment can infiltrate to inside the vessel, carrying any contaminants with it. Lastly, destructive testing should be avoided if possible because it involves high costs and inherent problems of reliability, due to the destructive nature thereof. In fact, bottles with micro-damage which have not been subjected to tests would be declared suitable even when not being so.

There are also other direct methods for verifying the integrity of the coupling between a container and the closure thereof. These methods have been applied in the pharmaceutical industry for at least 20 years, for verifying the integrity of ampoules or vials containing liquid medicines. They are known as HVLD tests (acronym for the expression "High Voltage Leak Detection"), which are based on current flow analysis in a measuring circuit applied to the container. The verification is performed using two electrical probes applied in different areas of the container. A voltage pulse of a few tens of kilovolts is applied to a first probe (for example, placed in proximity of the cap) giving rise to a current which propagates through the beverage contained in the container and reaches a second probe placed on the body of the container. If there are defects, the value of the electrical signal detected by the second probe exceeds a predefined critical threshold. In the absence of defects, however, this value stays below the critical threshold. Examples of HVLD tests are proposed in documents U.S. 6,009,744 and U.S. 7,038,464.

A first disadvantage associated with the known solutions of HVLD testing lies in the need to prepare ad hoc test stations for test vials that are already filled and closed. In practice, these tests are performed off-line.

A second disadvantage is linked to the fact that, in order to detect the passage of current in the substance, the containers have to be rotated by 90° or be turned completely upside down. In fact, if the container were to be maintained upright, that is, with the mouth facing upwards, the liquid substance contained in it would not be in contact with the cap and, therefore, there would be an interruption of the electrical discharge circuit.

A method for testing features of a container is also disclosed in US6,240,769.

In this context, the technical task underpinning the present invention is to provide a device for capping and a method for verifying the air-tightness of the coupling between a container in a non-conductive material and its closure, and which obviate the above-mentioned drawbacks in the prior art.

In particular, the aim of the present invention is to disclose a method for verifying the air-tightness of the coupling between a container made of a non-conductive material and the closure thereof, which can be carried out in- line, in a direct and nondestructive way.

The set technical task and the specified aims are substantially attained by a device for capping and a method for verifying the air-tightness of the coupling between a container made of a non-conductive material and the closure thereof, comprising the technical characteristics set down in one or more of the appended claims.

Further characteristics and advantages of the present invention will become more apparent from the nonlimiting indicative description that follows of an embodiment of a preferred but not exclusive of a capping device and a method for verifying the air-tightness of the coupling between a container made of a non-conductive material and the closure thereof, as illustrated in the accompanying drawings in which:
- figure 1 shows a capping device, according to the present invention, in a sectioned view;
- figure 2 shows a container on which the capping device of figure 1 is applied;
- figure 3 shows the coupling between a closure and the capping head of the device of figure 1.

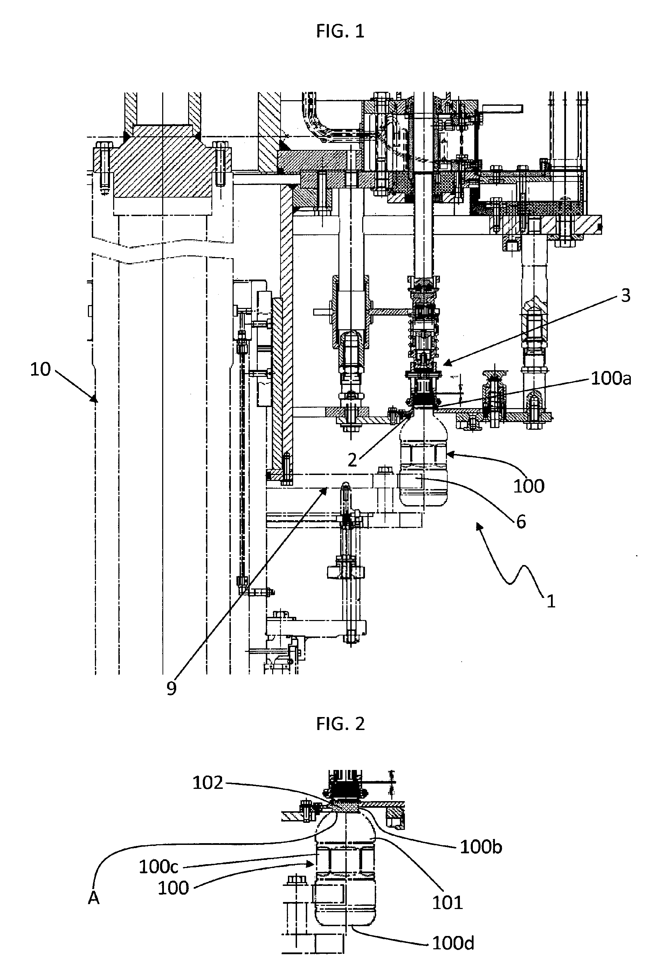

With reference to the figures, the number 1 indicates a device for capping a container 100 containing fluid. The container 100 is made of a non-conductive material, e.g. plastic or glass. As can be seen in figure 2, the container 100 contains a liquid substance 101, for example a beverage, and a layer of conductive foam 102 located above the free surface A of the liquid substance 101. The foam layer 102 fills the area of the neck 100b up to the mouth 100a of the container 100. The foam layer 102 is generated from the liquid substance 101, as will be described in the following. The capping device 1 comprises a supporting organ 2 operatively active on the container 100 such as to keep it upright, that is, with the mouth 100a facing upwards. The supporting organ 2 is preferably operatively active on the neck 100b of the container 100 (see figure 2) and abuts on the rim.

In particular, the supporting organ 2 is constituted by a gripper mounted on a rotating carousel 10 which bears a plurality of capping devices 1.

In an alternative embodiment (not illustrated), there is an additional supporting organ formed by a plate operatively active on the bottom 100d of the container 100 such as to support it.

The capping device 1 comprises a capping head 3 for apply a closure 200 on the mouth 100a of the container 100.

In a novel way, the capping device 1 comprises a module for verifying the airtight seal coupling between the closure 200 and container 100. The verifying module comprises an inspection electrode 5 and a counter-electrode 6.

The inspection electrode 5 is integral with the capping head 3, and in an operating configuration of the verifying module is in contact with the closure 200 such as to transmit an electrical signal thereto.

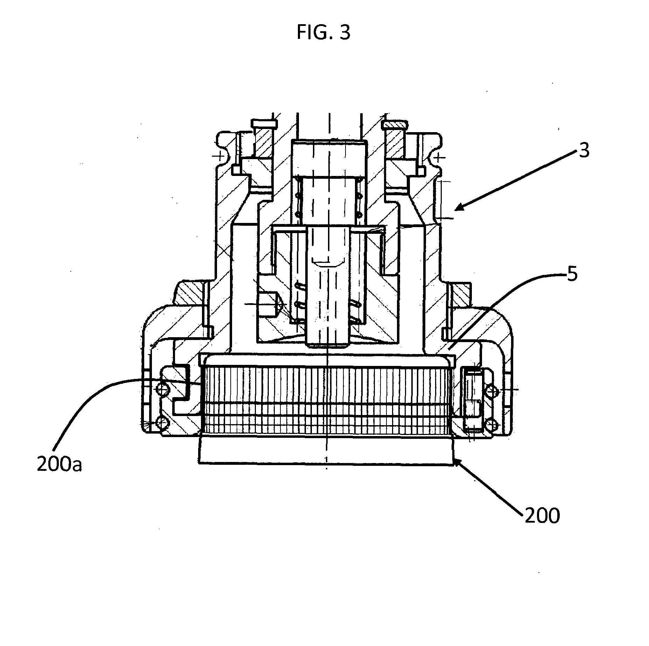

The capping head 3 preferably exhibits a shoulder ("cone"), provided with insulation, which serves as an inspection electrode 5, as shown in figure 3. In particular, the abutment 5 is shaped in such a way as to ensure a snug contact with a knurled external surface 200a of the closure 200 in order to impart rotation thereon so that it can be screwed.

The capping device 1 further comprises a lateral guiding organ 9 operatively active on the body 100c of the container 100 such as at least partially to surround it. The counter-electrode 6 is advantageously integral to the lateral guiding organ 9. In particular, the counter-electrode 6 is inserted in a housing compartment of the lateral guiding organ 9.

In the operative configuration of the verifying module, the counter-electrode 6 is in contact with a portion of the container 100 in order to detect the electrical signal which has spread through the foam layer 102 and the liquid substance 101.

In the embodiment described and illustrated herein, the counter-electrode 6 is inserted into the housing compartment of the lateral guiding organ 9 and can contact a portion of the body 100c of the container 100.

The intensity of the electrical signal detected by the counter-electrode 6 is compared with a predetermined threshold by comparing means.

Preferably, the electrical signal is a train of voltage pulses of a few tens of kilovolts generated by a pulse generator.

The value of the current flowing through the foam layer 102 and the liquid substance 101 depends on the presence of holes or defects in the closure 200 and the series electrical resistance provided by the foam layer 102 and the liquid substance 101.

It is well known that the electrical resistance depends on the thickness, the section and the intrinsic resistivity of the material in question (foam or liquid). Therefore, the value of the predetermined threshold must be set as a function of these resistors. Preferably, the comparing means perform a comparison between current values; therefore the signal detected by the counter-electrode 6 is a current signal and the predetermined threshold is a current.

Purely by way of example, by applying an electrical signal of a few tens of kV, the current flowing in the fluid (foam layer and liquid substance) is of the order of tens of mA in the presence of defects in coupling and the order of tens of µA in the case of a perfect seal (defects substantially negligible).

Preferably, the pulse generator and the comparator means are shared between a plurality of capping devices 1 mounted on the rotating carousel 10.

The method for verifying the airtightness of the coupling between a container made of a non-conductive material containing a liquid substance and a closure is described below.

It should be noted that the container 100 is maintained upright during all the steps of the process described herein.

In the container 100, previously filled with a liquid substance 101 (the filling phase is not part of the invention and is therefore not described), a layer of foam 102 is generated which extends into the neck 100b and up to the mouth 100a. The foam layer 102 is generated using known methods. For example, the foam layer 102 is generated by injecting a liquid at high pressure on top of the free surface A of the liquid substance 101, or dissolving a gas previously saturated in the liquid substance 101.

The mouth 100a is then sealed by the capping head 3, which applies the closure 200. For example, the closure 200 consists of a cap or capsule which is screwed on or pushed at pressure onto the mouth 100a. In this way, the top of the closure 200 comes into contact with the underlying foam layer 102.

On conclusion of the sealing, verification is performed of the integrity of the coupling between the closure 200 and the container 100. The capping head 3 is kept in contact with the closure 200. The pulse generator sends the train of voltage pulses to the inspection electrode 5, which transmits it to the closure 200. The electrical signal is applied for a time preferably ranging between 50 ms and 60 ms.

The electrical voltage signal produces a current that flows into the foam layer 102 and into the liquid substance 101 and which is detected at the counter-electrode 6, placed for example on the body 100c of the container 100.

The comparator means, which are part of a processing unit of known type and therefore are not described, perform the comparison between the intensity of the detected signal and the predetermined threshold. The comparison is preferably performed on differential current signals. For example, it is the difference between the current value at the inspection electrode 5 and at the counter-electrode 6 that is compared with the predetermined threshold.

In a case in which the threshold is exceeded, the container 100 will be discarded as defective.

Conversely, if the intensity of the detected signal is below the predetermined threshold, the container 100 will be evaluated as in accordance with the quality standards required by the line.

From the above description the characteristics clearly emerge of the capping device and the verification process of the airtightness of the coupling between a container made of a non-conductive material and the closure thereof of the present invention, and the advantages thereof also clearly emerge.

In particular, thanks to the fact that the inspection electrode is located on the capping head, the method for verifying the integrity of the closure of the container is made directly "in line", i.e. in the capping station, thus reducing time and overall process costs and ensuring high reliability (all bottles are tested). This is also enabled by the fact that the counter-electrode is integral with the lateral container guide.

Further, since the inspection electrode and the counter-electrode are part of the capping device, the preparation of the verifying module (which is in effect an HVLD test module) does not affect the overall dimensions.

Moreover, the presence of the foam layer below the cap ensures the closure of the circuit which goes from the inspection electrode to the counter-electrode, so it is no longer necessary to rotate or invert the container. The container can in fact be kept upright, which enables verification of the integrity thereof in the capping station (this would not be possible if the container were turned upside down).

Finally, the layer of foam that acts as a conductive bridge also has the advantageous effect of reducing the oxygen present in the neck area.

## Claims

1. Method for verifying the airtight seal of the coupling between a container (100) made of non-conductive material for containing a liquid substance (101) and a closure (200), comprising the following steps:
obtaining a conductive foam layer (102) above the free surface (A) of the liquid substance (101) so as to fill the zone of the mouth (100a) of the container (100);
maintaining the container (100) in upright position, i.e. with the mouth (100a) facing upwards;
sealing the mouth (100a) of the container (100) with the closure (200) by means of a capping head (3), said closure (200) contacting the foam layer (102) beneath; **characterized by** applying an electrical signal to the closure (200) by means of an inspection electrode (5) integral to the capping head (3);
measuring the intensity of the electrical signal spreading across the foam layer (102) and the liquid substance (101) at a portion of the container (100) by means of a counter-electrode (6) applied hereto;
comparing the intensity of the electrical signal detected by the counter-electrode (6) with a pre-established threshold.

2. Method according to claim 1, wherein the step of applying the electrical signal to the closure (200) occurs after the step of sealing the mouth (100a) of the container(100) with the closure (200) itself.

3. Method according to claim 1 or 2, wherein the step of applying the electrical signal to the closure (200) lasts between 50 ms and 60 ms.

4. Method according to any of the previous claims, wherein the step of obtaining the foam layer (102) is performed by injecting high pressure liquid on the free surface (A) of the liquid substance (101).

5. Method according to claims 1 to 3, wherein the step of obtaining the foam layer (102) is performed by dissolving a gas previously saturated in the liquid substance (101).

6. Method according to any of the previous claims, further comprising the step of discarding the container (100) in case the intensity of the electrical signal detected by the counter-electrode (6) is above said pre-established threshold.

7. Method according to any of the previous claims, wherein the step of comparing the intensity of the electrical signal detected by the counter-electrode (6) with a pre-established threshold consists in calculating the difference between the intensity of the signal applied at the inspection electrode (5) and the intensity of the signal detected by the counter-electrode (6) and, successively comparing said difference with the pre-established threshold.

8. Capping device (1) for a container (100) made of non-conductive material and containing a liquid substance (101) and a layer of conductive foam (102) located above the free surface (A) of the liquid substance (101), comprising:
a supporting organ (2) operatively active on the container (100) for maintaining it in upright position, i.e. with the mouth (100a) facing upwards;
means for obtaining a conductive foam layer (102) above the free surface (A) of the liquid substance (101) so as to fill the zone of the mouth (100a) of the container (100);
a capping head (3) susceptible of applying a closure (200) on the mouth (100a) of the container (100) so that said closure (200) contacts the foam (102) beneath; **characterised in that** it comprises a module for verifying the airtight seal of the coupling between the closure (200) and the container (100), said verifying module comprising:
an inspection electrode (5) integral to the capping head (3), in an operative configuration of the verifying module said inspection electrode (5) being in contact with the closure (200) for transmitting thereto an electrical signal;
a counter-electrode (6) which, in the operative configuration of the verifying module, is in contact with a portion of the container (100) for detecting the electrical signal spreading across the foam layer (102) and the liquid substance (101) contained in the container (100);
means for comparing the intensity of the electrical signal detected by the counter-electrode (6) with a pre-established threshold.

9. Capping device (1) according to claim 8, further comprising a lateral guiding organ (9) operatively active on the body (100b) of the container (100) for surrounding it at least partially, said counter-electrode (6) being integral to the lateral guiding organ (9).

10. Capping device (1) according to claim 8 or 9, wherein said verifying module further comprises a voltage pulse generator connected to said inspection electrode (5).

11. Capping device (1) according to any of the claims 8 to 10, wherein said capping head (3) presents a shoulder acting as inspection electrode (5) and shaped in such a way as to match on an external knurled surface (200a) of the closure (200).

## Patentansprüche

1. Verfahren zum Prüfen des luftdichten Verschlusses der Kopplung zwischen einem Behälter (100) aus einem nicht leitenden Material zur Aufnahme einer flüssigen Substanz (101) und einem Verschluss (200), umfassend folgende Schritte:
Erhalten einer leitenden Schaumschicht (102) über der freien Oberfläche (A) der flüssigen Substanz (101), um den Bereich der Öffnung (100a) des Behälters (100) zu füllen;
Beibehalten des Behälters (100) in einer aufrechten Position, d. h. so, dass die Öffnung (100a) nach oben gerichtet ist;
Verschließen der Öffnung (100a) des Behälters (100) mit dem Verschluss (200) mittels eines Verschließkopfs (3), wobei der Verschluss (200) die darunter befindliche Schaumschicht (102) berührt; **gekennzeichnet durch** das Anwenden eines elektrischen Signals auf den Verschluss (200) mittels einer Prüfelektrode (5), die fest mit dem Verschließkopf (3) verbunden ist;
Messen der Stärke des elektrischen Signals, das **durch** die Schaumschicht (102) und die flüssige Substanz (101) verteilt wird, an einem Abschnitt des Behälters (100) mittels einer daran angebrachten Gegenelektrode (6);
Vergleichen der Stärke des von der Gegenelektrode (6) erfassen elektrischen Signals mit einem vorgegebenen Schwellenwert.

2. Verfahren nach Anspruch 1, wobei der Schritt des Anwendens des elektrischen Signals auf den Verschluss (200) nach dem Schritt des Verschließens der Öffnung (100a) des Behälters (100) mit dem Verschluss (200) erfolgt.

3. Verfahren nach Anspruch 1 oder 2, wobei der Schritt des Anwendens des elektrischen Signals auf den Verschluss (200) 50 ms bis 60 ms dauert.

4. Verfahren nach einem der vorhergehenden Ansprüche, wobei der Schritt des Erhaltens der Schaumschicht (102) ausgeführt wird, indem eine Hochdruckflüssigkeit auf die freie Oberfläche (A) der flüssigen Substanz (101) eingespritzt wird.

5. Verfahren nach Anspruch 1 bis 3, wobei der Schritt des Erhaltens der Schaumschicht (102) ausgeführt wird, indem ein zuvor in der flüssigen Substanz (101) gesättigtes Gas aufgelöst wird.

6. Verfahren nach einem der vorhergehenden Ansprüche, ferner umfassend den Schritt des Aussonderns des Behälters (100), wenn die Stärke des von der Gegenelektrode (6) erfassten elektrischen Signals über dem vorgegebenen Schwellenwert liegt.

7. Verfahren nach einem der vorhergehenden Ansprüche, wobei der Schritt des Vergleichens der Stärke des elektrischen Signals, erfasst von der Gegenelektrode (6), mit einem vorgegebenen Schwellenwert darin besteht, dass die Differenz zwischen der Stärke des auf die Prüfelektrode (5) angewandten Signals und der Stärke des von der Gegenelektrode (6) erfassten Signals berechnet wird, wobei diese Differenz anschließend mit dem vorgegebenen Schwellenwert verglichen wird.

8. Verschließvorrichtung (1) für einen Behälter (100), bestehend aus nicht leitendem Material und enthaltend eine flüssige Substanz (101) und eine Schicht eines leitenden Schaums (102), positioniert über der freien Oberfläche (A) der flüssigen Substanz (101), umfassend:
ein Trageelement (2), das operativ auf dem Behälter (100) aktiv ist, um diesen in einer aufrechten Stellung beizubehalten, d. h. so, dass die Öffnung (100) nach oben gerichtet ist;
Mittel zum Zurückhalten einer leitenden Schaumschicht (102) über der freien Oberfläche (A) der flüssigen Substanz (101), um den Bereich der Öffnung (100a) des Behälters (100) zu füllen;
einen Verschließkopf (3), der so eingerichtet ist, dass er einen Verschluss (200) an der Öffnung (100a) des Behälters (100) anbringen kann, sodass der Verschluss (200) die darunter befindliche Schaumschicht (102) berührt;
**dadurch gekennzeichnet, dass** sie ein Modul für die Prüfung des luftdichten Verschlusses der Kopplung zwischen dem Verschluss (200) und dem Behälter (100) umfasst, wobei dieses Prüfmodul umfasst:
eine Prüfelektrode (5), die in einer Betriebskonfiguration des Prüfmoduls fest mit dem Verschließkopf (3) verbunden ist, wobei die Prüfelektrode (5) mit dem Verschluss (200) in Kontakt steht, um diesem ein elektrisches Signal zu übermitteln;
eine Gegenelektrode (6), die in der Betriebskonfiguration des Prüfmoduls mit einem Abschnitt des Behälters (100) in Kontakt steht, um das elektrische Signal zu erfassen, das durch die Schaumschicht (102) und die flüssige Substanz (101), enthalten im Behälter (100), verteilt wird;
Mittel zum Vergleichen der Stärke des von der Gegenelektrode (6) erfassen elektrischen Signals mit einem vorgegebenen Schwellenwert.

9. Verschließvorrichtung (1) nach Anspruch 8, ferner umfassend ein seitliches Führungselement (9), das operativ auf dem Körper (100b) des Behälters (100) aktiv ist, um diesen zumindest teilweise zu umgeben, wobei die Gegenelektrode (6) fest mit dem seitlichen Führungselement (9) verbunden ist.

10. Verschließvorrichtung (1) nach Anspruch 8 oder 9, wobei das Prüfmodul ferner einen Spannungsimpulsgenerator, verbunden mit der Prüfelektrode (5), umfasst.

11. Verschließvorrichtung (1) nach einem der Ansprüche 8 bis 10, wobei der Verschließkopf (3) eine Schulter aufweist, die als Prüfelektrode (5) wirkt und passend zu einer äußeren gerändelten Oberfläche (200a) des Verschlusses (200) ausgebildet ist.

## Revendications

1. Procédé permettant de vérifier le joint étanche à l'air du couplage entre un récipient (100) constitué d'un matériau non conducteur destiné à contenir une substance liquide (101) et une fermeture (200), comprenant les étapes suivantes :
former une couche de mousse conductrice (102) au-dessus de la surface libre (A) de la substance liquide (101) de sorte à remplir la zone du goulot (100a) du récipient (100) ;
garder le récipient (100) en position droite, c.-à-d. avec le goulot (100a) dirigé vers le haut ;
fermer hermétiquement le goulot (100a) du récipient (100) par la fermeture (200) avec une tête d'encapsulage (3), ladite fermeture (200) touchant la couche de mousse (102) située en dessous ; **caractérisé en ce qu'**un signal électrique est appliqué à la fermeture (200) par une électrode de contrôle (5) solidaire de la tête d'encapsulage (3) ;
mesurer l'intensité du signal électrique se propageant à travers la couche de mousse (102) et la substance liquide (101) au niveau d'une partie du récipient (100) à l'aide d'une contre-électrode (6) appliquée au récipient ;
comparer l'intensité du signal électrique détecté par la contre-électrode (6) à un seuil prédéterminé.

2. Procédé selon la revendication 1, dans lequel l'étape d'application du signal électrique à la fermeture (200) se fait après l'étape de fermeture hermétique du goulot (100a) du récipient (100) avec la fermeture (200).

3. Procédé selon les revendications 1 ou 2, dans lequel l'étape d'application du signal électrique à la fermeture (200) dure de 50 ms à 60 ms.

4. Procédé selon l'une quelconque des revendications précédentes, dans lequel l'étape de formation de la couche de mousse (102) se fait par injection d'un liquide haute pression sur la surface libre (A) de la substance liquide (101).

5. Procédé selon les revendications 1 à 3, dans lequel l'étape de formation de la couche de mousse (102) se fait par dissolution d'un gaz au préalable saturé dans la substance liquide (101).

6. Procédé selon l'une quelconque des revendications précédentes, comprenant également l'étape d'écarter le récipient (100) si l'intensité du signal électrique détecté par la contre-électrode (6) est supérieure audit seuil prédéterminé.

7. Procédé selon l'une quelconque des revendications précédentes, dans lequel l'étape de comparaison de l'intensité du signal électrique détecté par la contre-électrode (6) à un seuil prédéterminé revient à calculer l'écart entre l'intensité du signal appliqué au niveau de l'électrode de contrôle (5) et l'intensité du signal détecté par la contre-électrode (6), puis à comparer ledit écart au seuil prédéterminé.

8. Dispositif d'encapsulage (1) pour un récipient (100) constitué d'un matériau non conducteur et contenant une substance liquide (101) et une couche de mousse conductrice (102) située au-dessus de la surface libre (A) de la substance liquide (101), comprenant :
un organe de soutien (2) opérationnellement actif sur le récipient (100) pour le garder en position droite, c.-à-d. avec le goulot (100a) dirigé vers le haut ;
des moyens pour former une couche de mousse conductrice (102) au-dessus de la surface libre (A) de la substance liquide (101) de sorte à remplir la zone du goulot (100a) du récipient (100) ;
une tête d'encapsulage (3) susceptible d'appliquer une fermeture (200) sur le goulot (100a) du récipient (100), de sorte que ladite fermeture (200) touche la couche de mousse (102) située en dessous ;
**caractérisé en ce qu'**il comprend un module pour vérifier le joint étanche à l'air du couplage entre la fermeture (200) et le récipient (100), ledit module de contrôle comprenant :
une électrode de contrôle (5) solidaire de la tête d'encapsulage (3), ladite électrode de contrôle (5), dans une configuration opérationnelle du module de contrôle, étant en contact avec la fermeture (200) pour lui transmettre un signal électrique ;
une contre-électrode (6) qui, dans la configuration opérationnelle du module de contrôle, est en contact avec une partie du récipient (100) pour détecter le signal électrique se propageant à travers la couche de mousse (102) et la substance liquide (101) contenue dans le récipient (100) ;
des moyens pour comparer l'intensité du signal électrique détecté par la contre-électrode (6) à un seuil prédéterminé.

9. Dispositif d'encapsulage (1) selon la revendication 8, comprenant également un organe de guidage latéral (9) opérationnellement actif sur le corps (100b) du récipient (100) pour l'entourer au moins partiellement, ladite contre-électrode (6) étant solidaire de l'organe de guidage latéral (9).

10. Dispositif d'encapsulage (1) selon les revendications 8 ou 9, dans lequel ledit module de contrôle comprend aussi un générateur d'impulsions de tension connecté à ladite électrode de contrôle (5).

11. Dispositif d'encapsulage (1) selon l'une quelconque des revendications 8 à 10, dans lequel ladite tête d'encapsulage (3) présente un épaulement faisant office d'électrode de contrôle (5) et avec une forme telle qu'il s'imbrique dans une surface extérieure crénelée (200a) de la fermeture (200).
